Europäisches Patentamt

European Patent Office

Office européen des brevets

(19)

(11) Publication number: **0 042 062**
**B1**

(12)

# EUROPEAN PATENT SPECIFICATION

(45) Date of publication of patent specification: **04.09.85**

(51) Int. Cl.⁴: **G 11 B 17/02, G 11 B 23/02**

(21) Application number: **81103616.9**

(22) Date of filing: **12.05.81**

(54) **Magnetic disk cartridges.**

(30) Priority: **18.06.80 US 160755**

(43) Date of publication of application:
**23.12.81 Bulletin 81/51**

(45) Publication of the grant of the patent:
**04.09.85 Bulletin 85/36**

(84) Designated Contracting States:
**DE FR GB**

(56) References cited:
**GB-A-1 525 849**
**US-A-3 416 150**
**US-A-3 593 327**
**US-A-4 120 012**
**US-A-4 159 494**

(73) Proprietor: **International Business Machines Corporation**
**Old Orchard Road**
**Armonk, N.Y. 10504 (US)**

(72) Inventor: **Wenner, John William**
**1810 N. Campbell Avenue**
**Tucson Arizona 85719 (US)**

(74) Representative: **Lewis, Alan John**
**IBM United Kingdom Patent Operations Hursley Park**
**Winchester, Hants, S021 2JN (GB)**

Courier Press, Leamington Spa, England.

## Description

The invention relates to cartridges containing (or for containing) magnetic recording disk, particularly flexible record disks.

In the field of magnetic recording on removable flexible disks mounted in cartridges, it would be desirable to be able to position the disk so as to permit simultaneous access to both recording surfaces of the disk by magnetic transducers for magnetically cooperating with the disk record surfaces. Heretofore, even though dual-sided flexible recording disks mounted in cartridges were known in the art, there was no practical way to insert such cartridges into a disk drive to permit simultaneous access to both of the disk recording surfaces. Instead, it was necessary to insert the cartridge into the drive for recording or reproducing on one side, then remove the cartridge and reverse it for re-insertion in the drive to obtain access to the other recording surface. This situation was caused by the fact that there had been no practical way to load two transducers against both surfaces of the disk in an insertable type cartridge.

In the prior art, ther are flexible disk drives which provide access to both sides of the disk, with the magnetic transducers operating in contact with the disk surfaces. However, this "contact" mode of operation is totally different from, and inapplicable to, flexible disks in a cartridge, where the disk and transducer operate in a Bernoulli air-bearing mode without contact between disk and transducer.

Prior Art

U.S Patent 3,593,327 discloses a disk cartridge having a shutter which is opened as the cartridge is inserted into a drive, to provide transducer access to one surface of the disk.

IBM Technical Disclosure Bulletin, Vol. 21, No. 8, January 1979, page 3079, shows a cartridge for a flexible disk having a pleated cover which is folded back by a detent during insertion of the cartridge in a drive, with the cover being returned to its covering position when the cartridge is withdrawn.

IBM Technical Disclosure Bulletin, Vol. 21, No. 9, February 1979, page 3556, shows a flexible disk cartridge having a flexible, slidable disk cover over each disk surface, the covers being automatically retracted as the cartridge is inserted in a drive.

U.S. Specification No. 4,120,012 (Bowers) discloses a diskette comprising a flexible magnetic disk which is enclosed in a jacket. The jacket has two openings through its walls, one at the centre to enable the disk to be engaged by a drive hub and the other off-set from the centre to enable the disk to be engaged by a read/write head. The Bower diskette comprises door members movable between positions in which the read/write head access openings are covered and in which the read/write head access openings are uncovered. In both positions the drive hub access openings are uncovered. This is achieved by making the drive hub access openings large enough to always leave the disk hub exposed.

UK Specification No. 1525849 (Hatchett) discloses a disk cartridge comprising a housing containing a circular Bernoulli plate backing a flexible disk. One wall of the housing and the Bernoulli plate have aligned transducer apertures through which a magnetic transducer can access one side of the disk. Second aligned apertures through the same wall of the housing and the Bernoulli plate permit a drive chuck to engage the disk. In one embodiment Hatchett describes a sliding plate which covers the transducer aperture in the housing wall but not the drive aperture and in an alternative embodiment Hatchett describes a pivoted plate which can cover both those apertures. Hatchett does not describe a cartridge capable of being reversibly mounted or capable of co-operating with two opposed magnetic transducers.

U.S. Specification No. 4,159,494 (Evans) describes a disk cartridge having a two part casing, the interior faces of which are profiled to provide rigid Bernoulli surfaces. Reverse profiled, curved transducer access slots are formed through the walls of the casing so that the cartridge can be turned over and the second surface of the disk accessed by the same head.

It is an object of the invention to provide a better magnetic disk cartridge. In particular it is an object of the invention to provide a magnetic disk cartridge which can be reversibly mounted on a disk drive and when so mounted on a suitable disk drive, both sides of the disk can be accessed without removing and remounting the cartridge the other way up.

It is a further object of the invention to provide a disk cartridge in which the flexible disk only conforms to the Bernoulli surface during rotation and, when not in use is allowed to assume it natural flat state.

Accordingly, the invention provides a magnetic disk cartridge for use with a magnetic disk drive having two oppositely directed transducer heads, said cartridge being reversibly mountable on the drive and when mounted presenting both recording surfaces for co-operation with the two heads and said cartridge comprising two inter-changeable similar disk-shaped cover members secured together to form a disk cavity therebetween, each cover member having a transducer access opening and a centrally located disk drive access opening; two D-shaped Bernoulli plate members disposed within the disk cavity so that the parallel edges overlap each other, each Bernoulli plate member having a transducer access opening and a centrally located disk drive access opening aligned with the corresponding openings in the cover members; a flexible magnetic recording disk disposed between the adjacent surfaces of the two Bernoulli plate members and, when not rotating, being underformed and lying in a radial plane of the cartridge; two shutters respectively disposed between the outer surfaces of the two Bernoulli plates and the inner surfaces of the two cover members, each shutter being provided by a plate normally covering and closing both the transducer access opening and the centrally located disk drive opening but being movable to uncover and open both those openings; abutment means provided by cam edges on the shutters for engagement by fixed stop means on the disk drive as the cartridge is mounted on the disk drive to move the shutters and uncover the four openings; and two springs respectively acting between the shutters and the lower cover members to bias the shutters to their normal positions.

In a preferred embodiment the Bernoulli plates comprise edge notches and the cover members comprise pins for engaging the notches to position accurately the Bernoulli plates within the cartridge and the cover members comprise precisely located apertures for co-operation with positioning dowels which engage the aperture to locate the cartridge and the back sides of the Bernoulli plates laterally to locate those plates.

A disk drive for use with a cartridge embodying the invention, together with the cartridge, will now be described by way of example, with reference to the accompanying drawings, in which:—

Fig. 1 is a persepective view of the disk drive;

Fig. 2 is a view of the front of the drives shown in Fig. 1;

Fig. 3 is a bottom view of the drive shown in Fig. 1, illustrating the location of the loading spring mechanism;

Fig. 4 is a sectional view along plane 4—4 of Fig. 3, illustrating the loading spring in the unloaded position;

Fig. 5 illustrates the loading spring in the loaded position;

Fig. 6 is a sectional view along plane 6—6 of Fig. 1;

Fig. 7 is a partial plan view illustrating the insertion of a cartridge into the drive;

Fig. 8 is similar to Fig. 7, and illustrates the opening of the shutter mechanisms in the cartridge by insertion into the drive; and

Fig. 9 is a perspective exploded view of a cartridge in accordance with the present invention.

The cartridge is described in detail hereinafter with reference to Fig. 9.

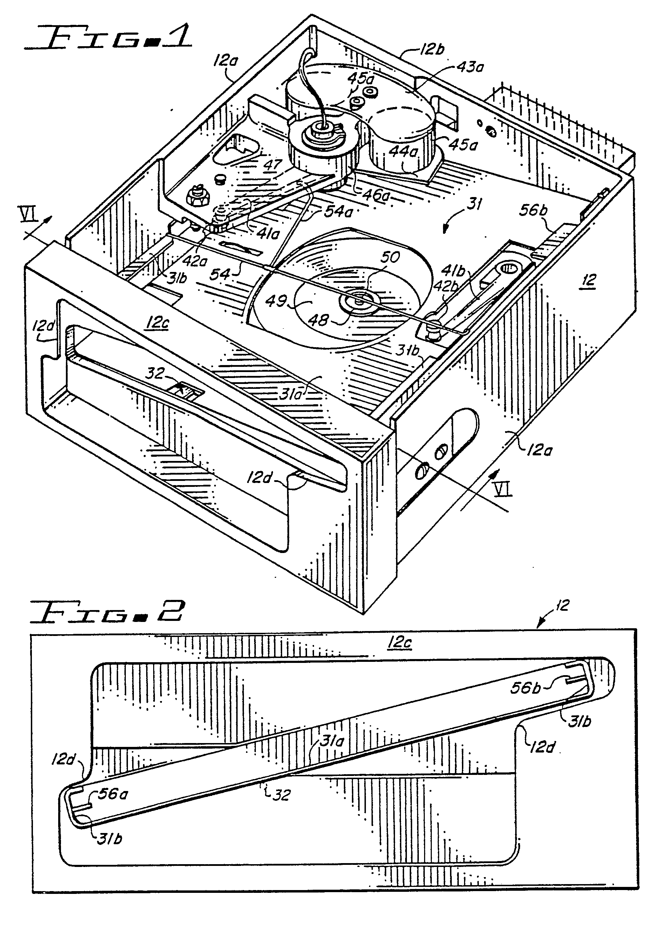

Referring first to Fig. 1, a cartridge in accordance with the present invention may be used in a drive which includes a housing 12 having side walls 12a, a rear wall 12b and a front member 12c, having ears 12d. Front member 12c is provided with a rectangular opening as shown for receiving a cartridge to be mounted in the drive. The cartridge employed may be of any suitable type, but preferably it is of the type disclosed in EP—A1—42061. Such a cartridge 15 is shown in perspective in Fig. 9 and includes a pair of mating cover members 16, 17 which enclose a flexible magnetic recording disk 20. Cartridge 15 also preferably encloses a pair of Bernoulli half plates 5, 6 which are disposed on opposite sides of disk 20 and which act to aerodynamically stabilze flexible disk 20, as described in detail in EP—A1—42061. Cover members 16, 17 are identical in configuration to each other, as are Bernoulli plates 5, 6, so as to reduce their fabrication and stocking costs. One small difference between members 16, 17 may be the provision of a slot 17a in member 17. The presence or absence of this slot may be sensed by microswitch means in the drive in which the cartridge is mounted to determine which side of disk 20 is adjacent the transducing means when the cartridge is mounted in a drive having only a single transducing means.

The hub which couples the flexible disk to a rotary power source is made up of two identical steel stampings 24a, 24b which are assembled back-to-back to form a hub which is side-to-side symmetrical. Flexible disk 20 is secured to this hub structure by means of an adhesive ring adhering to the flexible disk and to one side of the disk hub outer collar. The resulting cartridge structure has a symmetry which permits use of the cartridge with either side 16 or 17 up.

Cover members 16, 17 are each provided with shutter mechanisms 7, 8 respectively, which cover transducer openings 9a and 9b and central drive openings 10a, 10b in the cover members when the cartridge is not in use on a drive. Shutters 7, 8 are pivoted on their respective cover members at 21a, 21b, respectively, and are urged to their closed positions by springs 22a, 22b (Fig. 1). Each shutter has a lug portion 7a, 8a which engages a part of the cartridge drive when the cartridge is inserted therein to automatically open the shutters and expose the transducer openings and the drive openings in the cartridge in a manner to be described more fully below. Bernoulli plates 5, 6 each have transducer openings 11a, 12a and central drive openings 12a, 12b through which transducing means may protrude for magnetically recording or reproducing from the recording surfaces of disk 20. Plates 5, 6 preferably have notches 27a, 27b therein which engage pins or studs 28a, 28b in cover members 16, 17 to accurately position the plates in the cartridge.

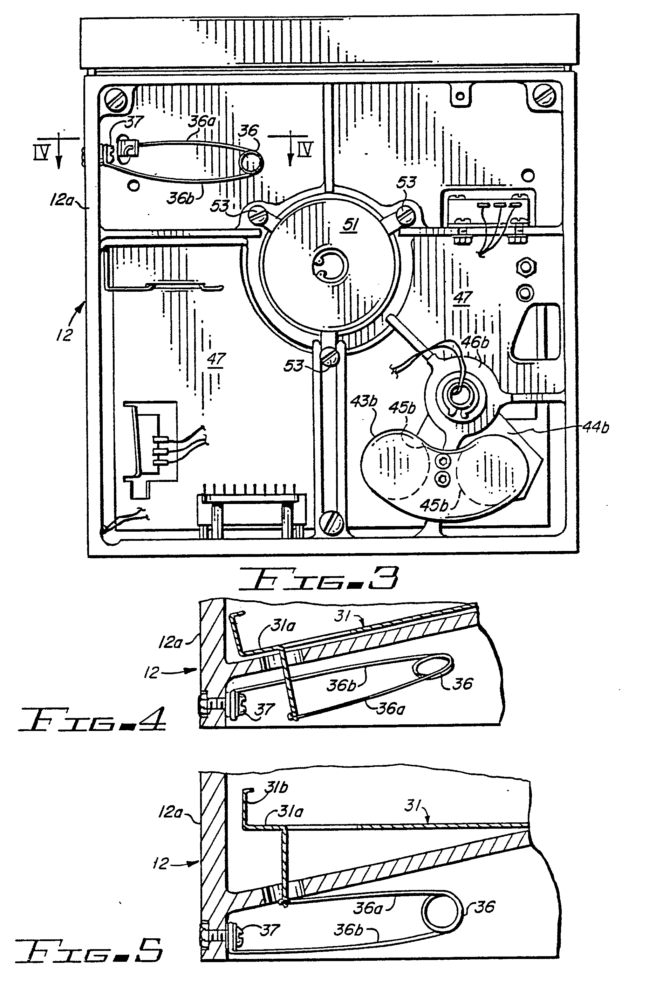

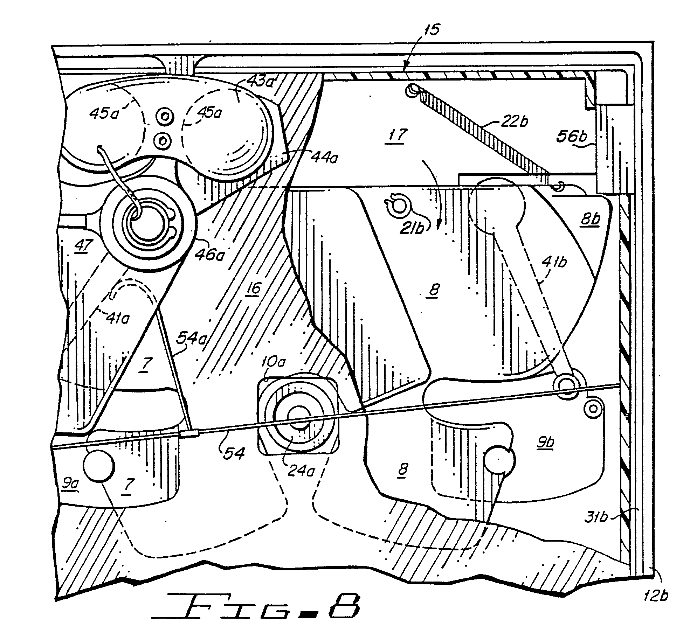

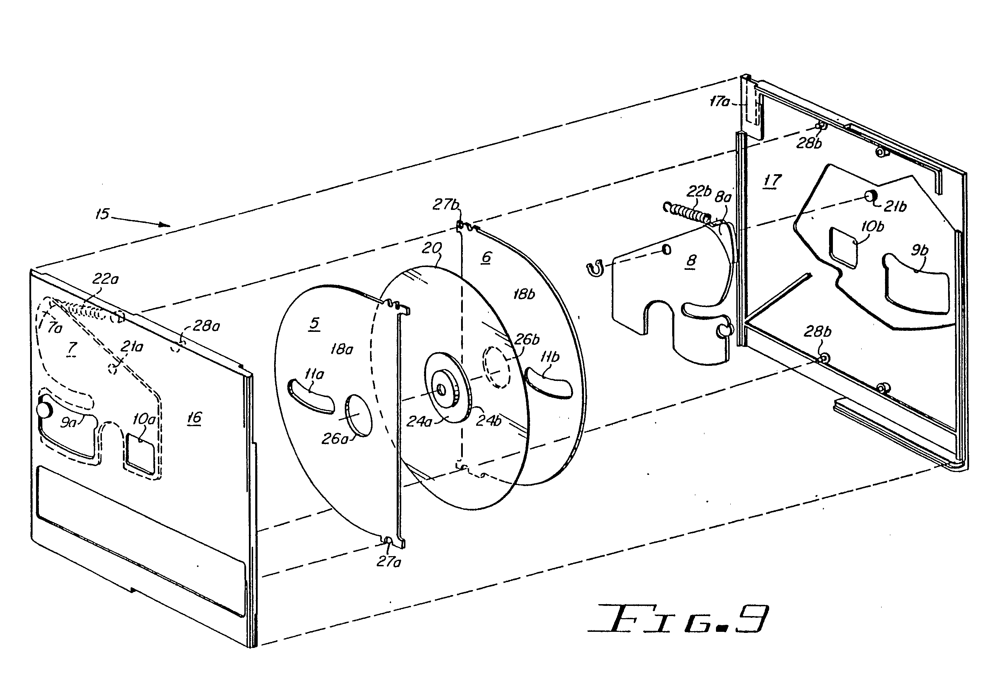

Referring again to Figs. 1 and 2, the drive device includes a pivotable tray member 31 into which cartridge 15 is inserted for mounting in the drive. Tray 31 has a bottom portion 31a and side walls 31b, the latter having overhanging portions as shown in Fig. 2 to assist in guiding and retaining cartridge 15 as it is inserted into tray 31. Bottom portion 31a has a central opening therein, as seen in Fig. 1, through which drive means extend when the tray is in the loaded position to provide a rotative force to disk 20, as will be described below. Tray 31 is pivoted on front and back pivot members 32 (Fig. 1 and 6) mounted on the drive frame. Pivot 32 is offset horizontally from the centerline 33 of the disk drive mechanism by an amount X. This pivot offset permits the cartridges and disk to be centered on the disks drive mechanism centerline when the cartridge is rotated into operating position. After insertion, cartridge 15 is pivotable in tray 31 about pivot 32 from the inserted position, shown in dotted outline in Fig. 6, to the operating or loaded position shown in solid lines in Fig. 6, in which the disk hub 24a or 24b engages disk drive means, and transducers are positioned in operative relationship to both sides of disk 20, as will be described more in detail below.

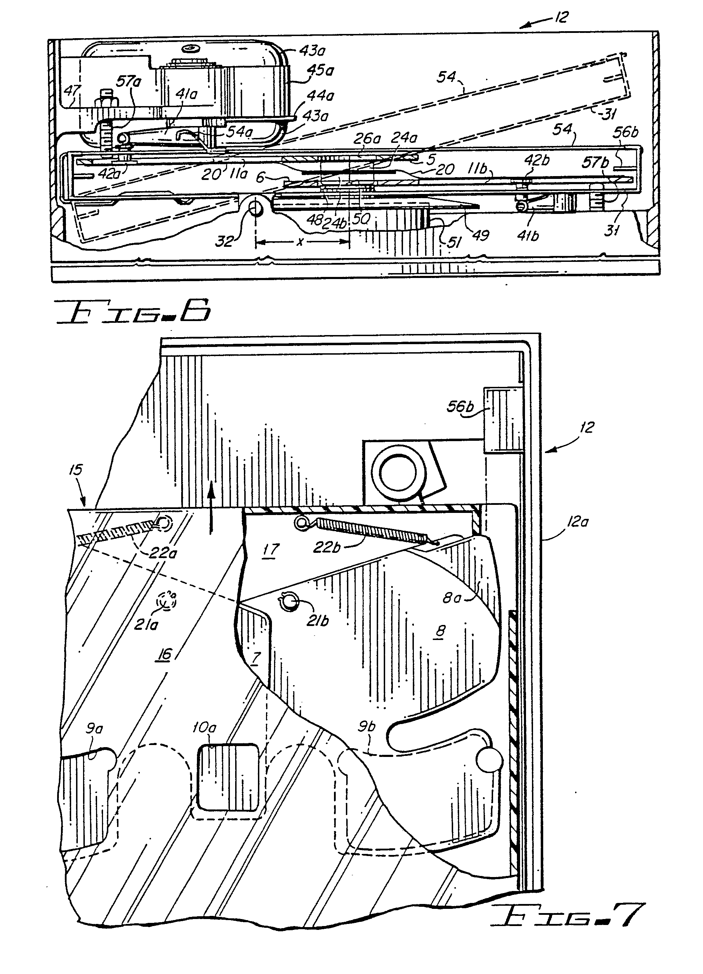

Figs. 3—5 illustrate a spring arrangement which provides a loading force when tray 31 is rotated to load the cartridge in operating position. The spring is an over-center spring 36 having one leg 36a connected to an extension of tray bottom portion 31a, and having another leg 36b rotatatably secured to the wall 12a of housing 12 by a shoulder screw 37. Prior to loading, tray 31 and spring 36 are in the position shown in Fig. 4. As tray 31 is rotated clockwise to load the cartridge, spring leg 36b rotates under shoulder screw 37 to reach the position shown in Fig. 5, with spring 36 providing a strong, positive loading force to load cartridge 15 in operating position. The maximum loading force is developed with minimal space requirements for the spring, thereby reducing the overall drive height, which is an important space consideration in small, low-cost files.

Referring again to Fig. 1, the drive includes a pair of transducing arms 41a, 41b carrying transducers 42a, 42b at the ends thereof which magnetically cooperate with the recording surfaces of disk 20 when the cartridge is in operating position. Lower transducer arm 41b extends through an opening in bottom portion 31a of tray 31 so as to position transducer 42b adjacent the lower surface of disk 20 when the cartridge is in the loaded position. Arms 41a, 41b are each part of respective rotary actuators which provide rotary motion to the associated arms to cause transducers 42a, 42b to be controllably positioned adjacent different concentric tracks on the surfaces of disk 20, as is well known in the art. The rotary actuator contains a voice coil motor structure in which a movable armature coil is positioned in a magnetic field, and variations in the armature coil current produce movement of the coil and the transducer arms and transducers. In the structure shown in Fig. 1, the armature coil for the upper actuator is in the form of a flat member 44a positioned in the magnetic field gap between an assembly of two magnets and two flux return paths. Armature coil 44a is directly connected to transducer arm 41a through a bearing member 46a mounted in casting 47 secured to walls of the drive. The magnets are preferably circular in configuration, as shown by magnets 45a for the upper actuator in Fig. 1 and magnets 45b for the lower actuator shown in Fig. 3. Magnets 45a, 45b are covered by upper and lower flux return path members 43a, 43b respectively, and these two flux return path members have rounded corners at both top and bottom, as best seen in Figs. 1 and 6, to reduce the possibility of stray flux from the magnets affecting the recorded information on disk 20.

The actuator magnet assembly shown has shorter, lower reluctance return paths, and is designed to use low cost standard catalog magnets. Unlike a conventional two magnet assembly with two "C" shaped return paths, the same return path is used for both magnets, with cost and space savings. By directly attaching the armature coil to the transducer arm, drive shaft torsional resonance is eliminated and the frequency response of the actuator is increased. In addition, the direct attachment to the arm also eliminates parts and therefore reduces cost and provides added reliability. The resulting actuator is much smaller than those used in the prior art and allows the drive to meet minimum space requirements. Comparable elements are provided for moving transducera 42b and transducer arm 41b (Fig. 1) including magnets 45b, flux return path member 43b, armature coil 44b, and bearing member 46b journalled in casting 47 (Fig. 3).

When cartridge 15 is in the loaded position shown in solid lines in Fig. 6, the lower hub 24b in disk 20 engages a magnetic clutch mechanism 48 to magnetically couple the hub and flexible disk to a drive member for rotating the magnetic disk. A centering pin 50, which is an extension of the drive motor shaft, extends through the opening in the bottom portion 31a of tray 31 to engage an opening in the disk hub when the tray and cartridge are in the operating position. By centering the disk hub on an extension of the drive motor shaft, alignment of the drive motor shaft and the disk axis of rotation is accomplished. The disk drive mechanism also includes a magnetic clutch flywheel 49 (Fig. 1) which is connected to the drive motor shaft. As best seen in Fig. 6, flywheel 49 is tapered in thickness outwardly from its center to insure clearance for tray 31 when in its cocked position.

The motor 51 which supplies the driving force to the disk through clutch 48, extends into the assembly (Fig. 6) to reduce the overall height of the drive. This is accomplished by recessing motor 51 in flywheel 49 as shown in Fig. 6. The motor 51 is mounted on casting 47 (Fig. 3) by means of screws 53, resulting in maximum heat transfer from the motor and minimum height requirements for motor mounting.

As best seen in Fig. 1, tray 31 includes a spring wire member 54 extending across tray 31 and serving to guide and restrain cartridge 15 as it is inserted into the tray. Also provided is a spring member 54a connected to member 54 whose function is to hold upper transducer arm 41a pivoted out of the way of cartridge 15 as it is inserted into the tray. When tray 31 is rotated to load cartridge 15, spring member 54a moves with this rotation releasing upper arm 41a to permit 41a to freely rotate under the influence of the rotary actuator to be positioned adjacent the transducer opening 9a in cartridge 15 (Fig. 9). This is an important feature in reducing the overall height of the drive, since without this pivoting of arm 41a during cartridge insertion, additional height would have to be provided in the drive to permit the cartridge to clear arm 41a during insertion.

The operation of the drive device to open shutter mechanisms 7, 8 in cartridge 15 (Fig. 9) as the cartridge is inserted in the drive is best illustrated in Figs. 7 and 8. In Fig. 7, cartridge 15 is being inserted into tray 31, as described above, but is not fully inserted and has not reached the position of tabs 56a, 56b in tray 31. In the position shown in Fig. 7 springs 22a, 22b retain shutters 7, 8 in the closed position to cover the transducer and drive openings.

In the position shown in Fig. 8, cartridge 15 has been further inserted into tray 31 so that the lug portions 7a, 8a of the shutters contact tabs 56a, 56b. This action causes shutter 8 to rotate in a clockwise direction against the action of spring 22b, and also causes shutter 7 to rotate in a counter-clockwise direction against the action of spring 22a, to thereby open transducer openings 9a, 9b and central drive openings 10a, 10b in the cartridge cover members 16, 17. When the cartridge is fully inserted, the shutters have completely uncovered the transducer openings and drive openings so that the cartridge may be used as described above for magnetically recording or reproducing on the rotating flexible disk 20. Ears 12d on front member 12c ensure that the cartridge and tray can not be rotated until the cartridge is fully inserted.

The drive is provided with locating pins to accurately locate Bernoulli plates 5, 6 and disk 20 relative to the read/write assembly represented by the transducers 42a, 42b on arms 41a, 41b. This is accomplished as follows: Initial location is provided by inserting and rotating the cartridge 15 in tray 31. Shutter springs 22a, 22b load the front of the cartridge against the back of the front bezel ears 12d to provide rough location in the in and out direction. As the cartridge rotates to its final position, locating pins 57a, 57b (Fig. 6) on top and bottom near the center of each edge, pick up the cartridge as it rotates. The end of each pin 57a, 57b has a small flat surrounded by a taper. This taper picks up the cartridge in its rough location and directs the mating taper in the cartridge wall opening to a precise location centered on the pin centerline, both top and bottom.

These two pins 57a, 57b determine a line of location, and as the respective tapers are seated, this becomes a plane which is rough guided by the tray. The pin flats project through small holes at the root of the tapers and pick up the side of the Bernoulli plates 5, 6 near the outside end of the slot provided in each plate for movement of the transducers and stabilizer. The pin flats have been previously located with respect to the transducer assemblies and therefore accurately locate Bernoulli plates 5, 6 and disk 20 (Fig. 6) with respect to the transducer assemblies.

From the foregoing, it will be seen there is provided a flexible disk cartridge having symmetrical parts and shape so as to reduce the cost of manufacture and permit use of the cartridge in a number of ways. Preferably, the cartridge is used with a drive as shown and described herein which provides the capability to provide access to both surfaces of the disk simultaneously. However, the cartridge of the invention may also be used in a drive which provides access to only one side of a disk at a time. In this mode, the cartridge may be inserted in the drive for access to one disk surface, then removed and reversed before reinsertion in the drive for access to the other disk surface.

## Claims

1. A magnetic disk cartridge for use with a magnetic disk drive having two oppositely directed transducer heads, said cartridge being reversibly mountable on the drive and when mounted presenting both recording surfaces for co-operation with the two heads and said cartridge comprising two inter-changeable similar disk-shaped cover members (16, 17) secured together to form a disk cavity therebetween, each cover member having a transducer access opening (9a, 9b) and a centrally located disk drive access opening (10a, 10b); two D-shaped Bernoulli plate members (5, 6) disposed within the disk cavity so that the parallel edges overlap each other, each Bernoulli plate member having a transducer access opening (11a, 11b) and a centrally located disk drive access opening (26a, 26b) aligned with the corresponding openings in the cover members; a flexible magnetic recording disk (20) disposed between the adjacent surfaces of the two Bernoulli plate members (5, 6) and, when not rotating, being underformed and lying in a radial plane of the cartridge; two shutters (7, 8) respectively disposed between the outer surfaces of the two Bernoulli plates (5, 6) and the inner surfaces of the two cover members (16, 17), each shutter (7, 8) being provided by a plate normally covering and closing both the transducer access opening (9a, 9b) and the centrally located disk drive opening (10a, 10b) but being movable to uncover and open both these openings; abutment means (7a, 8a) provided by cam edges on the shutters for engagement by fixed stop means (56a, 56b Fig. 2) on the disk drive as the cartridge is mounted on the disk drive to move the shutters and uncover the four openings; and two springs (22a, 22b) respectively acting between the shutters (7, 8) and the cover members (16, 17) to bias the shutters to their normal positions.

2. A cartridge as claimed in claim 1, in which the Bernoulli plates (5, 6) comprise edge notches (27a, 27b) and the cover members comprise pins (28a, 28b) for engaging the notches (27a, 27b) to position accurately the Bernoulli plates within the cartridge and the cover members (16, 17) comprise precisely located apertures for co-operation with positioning dowels (57a, 57b Fig. 6) which engage the aperture to locate the cartridge and the back sides of the Bernoulli plates laterally to locate those plates.

## Patentansprüche

1. Magnetplattenkassette zur Verwendung mit einem Magnetplattenantrieb, welcher zwei entgegengesetzt gerichtete Wandlerköpfe aufweist, wobei die Kassette umdrehbar auf dem Antrieb anbringbar ist und angebracht beide Aufzeichnungsflächen für ein Zusammenwirken mit den beiden Köpfen darbietet, wobei die Kassette zwei untereinander austauschbare gleichartige plattenförmige Abdeckelemente (16, 17), die einen Plattenhohlraum zwischen sich ausbildend aneinander befestigt sind, wobei jedes Abdeckelement eine Wandlerzugangsöffnung (9a, 9b) und eine mittig angeordnete Plattenantriebszugangsöffnung (10a, 10b) aufweist; zwei D-förmige Bernoulli-Plattenelemente (5, 6), die im Plattenhohlraum so angeordnet sind, daß die parallelen Ränder einander überlappen, wobei jedes Bernoulli-Plattenelement eine Wandlerzugangsöffnung (11a, 11b) und eine mittig angeordnete Plattenantriebszugangsöffnung (26a, 26b), die auf die entsprechenden Öffnungen der Abdeckelemente ausgerichtet sind, aufweist; eine biegsame magnetische Aufzeichnungsplatte (20), welche zwischen benachbarten Flächen der beiden Bernoulli-Plattenelemente (5, 6) angeordnet ist und, wenn sie sich nicht dreht, unverformt ist und in einer radialen Ebene der Kassette liegt; zwei Verschlußklappen (7, 8), die jeweils zwischen den Außenseiten der beiden Bernoulli-Platten (5, 6) und den Innenseiten der beiden Abdeckelemente (16, 17) angeordnet sind, wobei jede Verschlußklappe (7, 8) durch eine Platte gebildet ist, welche normalerweise sowohl die Wandlerzugangsöffnung (9a, 9b) als auch die mittig angeordnete Plattenantriebsöffnung (10a, 10b) abdeckt und verschließt, aber beide Öffnungen freigebend und öffnend bewegbar ist; Berührmittel (7a, 8a), welche durch Nockenränder auf den Verschlußklappen gebildet sind, für ein Angreifen an feststehenden Anschlagelementen (56a, 56b Fig. 2) des Plattenantriebs beim Anbringen der Kassette auf dem Plattenantrieb, um so die Verschlußklappen zu bewegen und die vier Öffnungen freizumachen; und zwei Federn (22a, 22b), die jeweils zwischen den Verschlußklappen (7, 8) und den Abdeckelementen (16, 17) die Verschlußklappen in ihre Normalstellungen belastend wirken, umfaßt.

2. Kassette nach Anspruch 1, bei welcher die Bernoulli-Platten (5, 6) Randkerben (27a, 27b) und die Abdeckelemente Stifte (28a, 28b) für ein Erfassen der Kerben (27a, 27b) aufweisen, um so die Bernoulli-Platten innerhalb der Kassette genau zu positionieren, und bei welcher die Abdeckelemente (16, 17) exakt angeordnete Öffnungen für ein Zusammenwirken mit Positionierstiften (57a, 57b Fig. 6) aufweisen, welche in die Öffnungen eingreifen und zur örtlichen Festlegung der Bernoulli-Platten die Kassette und die Rückseiten dieser Platten seitlich festlegen.

## Revendications

1. Cartouche pour disque magnétique pour utilisation avec un lecteur de disque magnétique pourvu de deux têtes de transducteurs disposées en sens opposé, ladite cartouche étant montée de façon réversible sur le lecteur et présentant, une fois, en place, les deux surfaces d'enregistrement pour une action commune avec les deux têtes et ladite cartouche comprenant deux éléments de couvercle (16, 17) semblables et interchangeables en forme de disque, fixés ensemble pour constituer entre eux une cavité circulaire, chaque élément de couvercle présentant une ouverture d'accès à un transducteur (9a, 9b) et une ouverture centrale d'accès au dispositif d'entraînement du disque (10a, 10b), deux éléments en forme de D de plaques de Bernouilli (5, 6) disposés dans la cavité circulaire de façon que leurs bords parallèles se recouvrent mutuellement, chaque élément formant plaque de Bernouilli ayant une ouverture (11a, 11b) pour l'accès d'un transducteur et une ouverture d'accès centrale (26a, 26b) à l'entraînement du disque, alignées sur les ouvertures correspondantes dans les éléments de couvercle; un disque souple d'enregistrement magnétique (20) disposé entre la surface adjacente des deux éléments formant plaques de Bernouilli (5, 6) et, qui lorsqu'il n'est pas en rotation, est non déformé et se trouve dans un plan radial de la cartouche; deux obturateurs (7, 8) disposés respectivement entre les surfaces extérieures des deux plaques de Bernouilli (5, 6) et les surfaces intérieures des deux éléments de couvercle (16, 17), chaque obturateur (7, 8) étant pourvu d'une plaque qui recouvre et ferme normalement à la fois l'ouverture d'accès au transducteur (9a, 9b) et l'ouverture centrale d'accès à l'entraînement du disque (10a, 10b) mais qui est mobile de façon à découvrir et à ouvrir ces deux ouvertures; un moyen de butée (7a, 8a) formé par les bords en forme de came des obturateurs pour venir en appui contre un moyen d'arrêt fixe (56a, 56b, Figure 2), prévu sur le lecteur de disque lorsque la cartouche est disposée sur le lecteur de disque pour déplacer les obturateurs et découvrir les quatre ouvertures; et deux ressorts (22a, 22b) agissant respectivement entre les obturateurs (7, 8) et les éléments de couvercle (16, 17) pour pousser les obturateurs dans leur position normale.

2. Une cartouche conforme à la revendication 1, dans laquelle les plaques de Bernouilli (5, 6) comprennent des encoches (27a, 27b) sur les bords et où les éléments de couvercle comportent des broches (28a, 28b) pour entrer en prise avec les encoches (27a, 27b) de façon à positionner avec précision les plaques de Bernouilli dans la cartouche et où les éléments de couvercle (16, 17) comportent des ouvertures positionnées avec précision qui coopèrent avec des chevilles de positionnement (57a, 57b, Figure 6) entrent en prise avec l'ouverture pour localiser la cartouche et les faces arrière des plaques de Bernouilli latéralement pour positionner ces plaques.

FIG.1

FIG.2

0 042 062

FIG-3

FIG-4

FIG-5

2

0 042 062

FIG-6

FIG-7

3

FIG-8

FIG.9

0 042 062